# EUROPÄISCHE PATENTANMELDUNG

(11) **EP 4 530 519 A1**
(43) Veröffentlichungstag der Anmeldung: **02.04.2025**
(21) Anmeldenummer: 24202157.4
(22) Anmeldetag: 24.09.2024
(51) Int. Cl.: F16L 55/165, B32B 1/08, B32B 3/26, B32B 27/32

(54) **RELINING-SCHLAUCH, VERFAHREN ZUM AUSKLEIDEN EINES SCHLITZRINNENKANALS MIT EINEM RELINING-SCHLAUCH UND VORRICHTUNG ZUR HERSTELLUNG EINES RELINING-SCHLAUCHES**

(30) Priorität: 27.09.2023 DE 102023126218
(71) Anmelder: Schuster, Rainer, 56593 Horhausen (DE)
(72) Erfinder: Schuster, Rainer, 56593 Horhausen (DE)
(74) Vertreter: KBN IP Patentanwälte Partnerschaft mbB

(57) **Zusammenfassung**

Die Erfindung betrifft einen Relining-Schlauch (1) mit einer Längsachse (L), umfassend einen Innenschlauch (10), einen Außenschlauch (12) und einen zwischen Innenschlauch (10) und Außenschlauch (12) angeordneten Liner (11) aus einem aushärtbaren Material, wobei der Außenschlauch (12) in einem streifenfömigen und in Richtung der Längsachse (L) verlaufenden Bereich (120) unterbrochen ist, so dass der Liner (11) in diesem Bereich (120) nicht vom Außenschlauch (12) bedeckt ist und unmittelbar auf den nicht vom Außenschlauch bedeckten Bereich des Liners (11) eine streifenförmige aushärtbare Beschichtung (13) aufbringbar ist, die mit dem Liner (11) im Bereich (120) haftfest verbindbar ist. Es wird ferner auch ein Verfahren zum Auskleiden eines Schlitzrinnenkanals mit einem derartigen Relining Schlauch sowie eine Vorrichtung zur Herstellung eines Relining-Schlauches angegeben.

## Beschreibung

Die Erfindung betrifft einen Relining-Schlauch mit einer Längsachse, umfassend einen Innenschlauch, einen Außenschlauch und einen zwischen Innenschlauch und Außenschlauch angeordneten Liner aus einem aushärtbaren Material.

Ferner betrifft die Erfindung auch ein Verfahren zum Auskleiden eines eine Vielzahl von Durchgangsschlitzen aufweisenden Schlitzrinnenkanals mit einem solchen Relining-Schlauch sowie eine Vorrichtung zur Herstellung eines solchen Relining-Schlauchs.

Für die Entwässerung größerer versiegelter Flächen, beispielsweise Rollfelder und Rollbahnen von Flughäfen, Autobahnen und dergleichen werden häufig Schlitzrinnenkanäle eingesetzt, die in der Lage sind, auch größere Wassermengen abzuführen. Wenn solche im Erdreich verlegte Schlitzrinnenkanäle durch Beschädigung oder altersbedingten Verschleiß undicht werden, müssen Sie saniert werden, was üblicherweise durch Einbringen eines Relining-Schlauches erfolgt, der über einen zwischen einen Innenschlauch und einen Außenschlauch eingebetteten Liner aus einem aushärtbaren Material verfügt. Der Relining-Schlauch wird in den Schlitzrinnenkanal eingebracht, üblicherweise durch Anlegen eines Innendrucks, insbesondere Druckluft, aufgeblasen und an die Innenwandung des Schlitzrinnenkanals angelegt, woraufhin der Liner ausgehärtet wird.

Üblicherweise ist der Liner aus einem strahlungshärtenden, meist UVlichthärtenden Kunststoff hergestellt und wird zum Zwecke des Aushärtens mit einer in den Relining-Schlauch innerhalb des Schlitzrinnenkanals eingebrachten UV-Strahlungsquelle bestrahlt, bis die Aushärtung des Liners abgeschlossen ist. Anschließend werden in Verlängerung der Durchgangsschlitze des Schlitzrinnenkanals Durchbrechungen in den Relining-Schlauch eingebracht, sodass der schadhafte Schlitzrinnenkanal saniert ist.

Problematisch ist jedoch die Abdichtung des in den Schlitzrinnenkanal eingebrachten Relining-Schlauches im Bereich der nachträglich eingebrachten Durchbrechungen an den Durchgangsschlitzen. Zum einen haben die üblichen Relining-Schläuche die Eigenschaft, sich nach dem Öffnen der Durchbrechungen über die Länge nach innen zu wölben, sodass ein Spalt zwischen dem Durchgangsschlitz des Schlitzrinnenkanals und dem Relining-Schlauch entstehen kann. Verstärkt wird dieses Problem dadurch, dass sich der üblicherweise aus einer Folie hergestellte Außenschlauch nicht mit dem üblicherweise aus Beton gefertigten Schlitzrinnenkanal verbinden kann. Der Außenschlauch ist jedoch notwendig, da er das Material des Relining-Schlauches gegen Abrieb beim Einziehen in den Schlitzrinnenkanal und gegen das Eindringen von Wasser schützt, um einem Verseifen insbesondere des Liners vorzubeugen. Infolge des insoweit insbesondere im Bereich der Durchgangsschlitze entstehenden Spaltes wird das System hinterläufig und Wasser oder Schadstoffe können zwischen den Relining-Schlauch und den Schlitzrinnenkanal gelangen und von dort unkontrolliert im Boden versickern.

Um diesem Problem zu begegnen, wurde in der DE 10 2001 003 960 A1 bereits vorgeschlagen, auf den Außenschlauch auf seiner Außenseite ein Außenvlies aufzukaschieren, welches mit einem Klebstoff versehen ist, um im Bereich der Durchgangsschlitze eine Verklebung mit dem Material des Schlitzrinnenkanals zu bewirken. Allerdings kommt es bei diesem bekannten Relining-Schlauch zu Problemen dahingehend, dass sich der ausgehärtete Liner von dem Außenschlauch löst, da er in ausgehärtetem Zustand leicht abziehbar ist. Der Außenschlauch wirkt von daher wie eine Trennschicht zwischen dem verklebten Schlitzrinnenkanal und der mit Klebstoff versetzten Außenvliesschicht einerseits und dem ausgehärteten Liner auf der Innenseite. Dies hat zur Folge, dass sich nach wie vor der ausgehärtete Liner durch die Biegespannung nach dem Öffnen der Schlitze von dem Außenschlauch löst und wieder einen Ringspalt im Schlitzbereich produziert.

Aufgabe der Erfindung ist es, einen Relining-Schlauch der eingangs genannten Art, ein Verfahren zum Auskleiden eines Schlitzrinnenkanals mit einem solchen Relining-Schlauch sowie eine Vorrichtung zur Herstellung eines solchen Relining-Schlauches vorzuschlagen, die die Nachteile des Standes der Technik überwinden.

Zur Lösung der gestellten Aufgabe wird erfindungsgemäß ein Relining-Schlauch gemäß den Merkmalen des Patentanspruchs 1 vorgeschlagen.

Ein Verfahren zum Auskleiden eines eine Vielzahl von Durchgangsschlitzen aufweisenden Schlitzrinnenkanals mit einem solchen Relining-Schlauch ist Gegenstand des Patentanspruches 7.

Eine Vorrichtung zur Herstellung eines Relining-Schlauches ist Gegenstand des Anspruchs 12.

Vorteilhafte Ausgestaltungen und Weiterbildungen der Erfindung sind Gegenstand der abhängigen Ansprüche.

Die Erfindung schlägt einen Relining-Schlauch mit einer Längsachse vor, der wie üblich einen Innenschlauch, einen Außenschlauch und einen zwischen Innenschlauch und Außenschlauch angeordneten Liner aus einem aushärtbaren Material aufweist. Erfindungsgemäß ist vorgesehen, dass der Außenschlauch in einem streifenförmigen und in Richtung der Längsachse verlaufenden Bereich unterbrochen ist, sodass der Liner in diesem Bereich nicht von Außenschlauch bedeckt ist und unmittelbar auf den nicht vom Außenschlauch bedeckten Bereich des Liners eine streifenförmige aushärtbare Beschichtung aufgebracht ist, die mit dem Liner in diesem Bereich haftfest verbindbar ist. Auf diese Weise ist es möglich, in dem streifenförmigen und in Richtung der Längsachse verlaufenden Bereich, der in Einbauposition des erfindungsgemäßen Relining-Schlauchs den Durchgangsöffnungen des Schlitzrinnenkanals zugewandt wird, über die aufgebrachte aushärtbare Beschichtung eine Verklebung einerseits an der Innenoberfläche des Schlitzrinnenkanals vorzunehmen und andererseits eine haftfeste Verbindung zum freigelegten aushärtbaren Liner in diesem Bereich herzustellen. Die bisher unvermeidliche Ausbildung einer Trennschicht durch den Außenschlauch in diesem Bereich und die damit einhergehende Gefahr einer Spaltbildung kann somit effektiv verhindert werden.

Erfindungsgemäß kann über die aufgebrachte Beschichtung in diesem Bereich eine Verklebung am Schlitzrinnenkanal einerseits und mit dem freigelegten Liner andererseits erfolgen.

Nach einem Vorschlag der Erfindung ist die Beschichtung auf Basis eines selbstaushärtenden oder ggf. unter Wärmeeinwirkung aushärtenden Epoxidharz oder eines Silikatharzes gebildet, insbesondere aus einem 2-komponentigen Epoxidharz mit einer an die örtlichen Einbaubedingungen angepassten Topfzeit von beispielsweise etwa 20-50 Minuten, welches durch Vermischung von Harz und einem geeigneten Härter zu einer reaktionsfähigen Harzbeschichtung angemischt wird. Ein solches Epoxid-Harz bietet darüber hinaus den Vorteil, dass es nach dem Aushärten nicht schrumpft.

Nach einem weiteren Vorschlag der Erfindung ist der Liner aus einem unter UV-Lichteinwirkung aushärtenden Kunststoffmaterial gebildet, insbesondere einem GfK-Kunststoffmaterial.

Nach einem weiteren Vorschlag der Erfindung wird der Außenschlauch aus einem mit Polymermaterial kaschierten Polyolefinvlies oder einer Polyolefinfolie gebildet. Auch der Innenschlauch kann aus einem solchen Material hergestellt werden.

Der in Richtung der Längsachse verlaufende Bereich, in welchem der Liner nicht vom Außenschlauch bedeckt ist und zur Aufbringung der Beschichtung vorgesehen ist, kann nach einem weiteren Vorschlag der Erfindung durchgängig über die gesamte Länge des erfindungsgemäßen Relining-Schlauches verlaufen und eine Breite aufweisen, die größer als die Breite der Durchgangsöffnungen des Schlitzrinnenkanals ausgebildet ist.

Die aushärtbare Beschichtung einerseits und der aushärtbare Liner andererseits werden bevorzugt von zwei Harzsystemen mit unterschiedlichem Aushärteverhalten gebildet, um formstabil zu bleiben und eine dauerhafte Fixierung in einem Schlitzrinnenkanal sicherzustellen. Beispielsweise kann der Liner aus einem strahlungshaltenden, insbesondere unter UV-Lichteinwirkung aushärtenden Material und die Beschichtung aus einem selbstaushärtenden oder unter Wärmezufuhr aushärtenden Material, insbesondere einem geeigneten Epoxidharz gebildet sein, welches in flüssiger Form auf den Relining-Schlauch im Bereich des freiliegenden Liners aufgetragen wird.

Alternativ kann die aushärtbare Beschichtung auch UV-lichtaushärtend ausgebildet sein, wie es auch bei aushärtbaren Liner vorgesehen ist, indem die aushärtbare Beschichtung beispielsweise aus dem gleichen Material wie der Liner gebildet ist. Beispielhaft seine hier UP-Harze oder chemisch beständige VE-Harze genannt.

Die Beschichtung kann in flüssiger oder pastöser Form im Bereich des freiliegenden Liners aufgetragen und beispielsweise mit einem Rakelmesser verstrichen werden oder aber in Form eines mit der Beschichtung getränkten streifenförmigen Trägergewebes, z.B. auf Glasfaserbasis, auf den freigelegten Bereich des Liners aufgelegt werden.

Das erfindungsgemäße Verfahren zum Auskleiden eines eine Vielzahl von Durchgangsschlitzen aufweisenden Schlitzrinnenkanals beruht darauf, dass ein Relining-Schlauch mit Innenschlauch, Außenschlauch und einem dazwischen angeordneten Liner aus einem aushärtbaren Material verwendet wird, der sich entlang einer Längsachse erstreckt und in den Schlitzrinnenkanal eingebracht wird. Erfindungsgemäß ist das Verfahren durch die Abfolge dieser Schritte gekennzeichnet:
a) Entfernen des Außenschlauches in einem streifenförmigen und in Richtung der Längsachse verlaufenden Bereich unter Freilegung des Liners im Bereich;
b) unmittelbares Aufbringen einer streifenförmigen aushärtbaren Beschichtung auf den freigelegten Liner im Bereich;
c) Einbringen des Relining-Schlauches in den Schlitzrinnenkanal, wobei der Bereich mit der aufgebrachten Beschichtung unterhalb der Durchgangsschlitze positioniert wird;
d) Beaufschlagen des Relining-Schlauches mit einem Innendruck und Aufweiten desselben bis zur Anlage an einer Innenwandung des Schlitzrinnenkanals;
e) Aushärten der Beschichtung und des Liners unter Aufrechterhaltung des Innendrucks;
f) Einbringen von mit den Durchgangsschlitzen kommunizierenden Durchbrechungen in den ausgehärteten Relining-Schlauch.

Erfindungsgemäß wird somit auf einen an sich bekannten Aufbau eines für die Kanal-sanierung bekannten Relining-Schlauches zurückgegriffen, der einen Innenschlauch, einen Außenschlauch und einen zwischen Innenschlauch und Außenschlauch angeordneten und vorzugsweise strahlungshärtenden Liner aufweist.

Zum Auskleiden eines sanierungsbedürftigen Schlitzrinnenkanals wird idealerweise unmittelbar vor dem Einbringen des Relining-Schlauchs in der nachfolgend noch beschriebenen Weise in einem streifenförmigen und in Richtung der Längsachse verlaufenden Bereich der Außenschlauch entfernt, sodass in diesem Bereich der Liner freigelegt wird und von der Außenseite zugänglich ist. Auf diesen im Bereich freigelegten Liner wird sodann eine geeignete streifenförmige aushärtbare Beschichtung, insbesondere aus einem 2-komponentigen und in flüssiger Form aufgebrachten Epoxidharz aufgebracht, sodass die Beschichtung unmittelbar auf dem freigelegten Liner zum Liegen kommt.

Während der verbleibenden und üblicherweise mehrere Minuten umfassenden Topfzeit der aufgebrachten Beschichtung wird der solchermaßen hergestelltem Relining-Schlauch ggf. zunächst eingefaltet und in der benötigten Länge in den Schlitzrinnenkanal eingebracht, wobei der Bereich mit der aufgebrachten Beschichtung unterhalb der Durchgangschlitze positioniert wird. Anschließend wird in an sich bekannter Weise der Relining-Schlauch mit einem Innendruck beaufschlagt, sodass er bis zur Anlage an der Innenwandung des Schlitzrinnenkanals aufgeweitet wird. Dabei wird die Beschichtung fest an den Innenumfangsbereich des Schlitzrinnenkanals angepresst, in welchem die Durchgangsschlitze angeordnet sind, sodass die zunächst noch flüssige Beschichtung in die Oberfläche des üblicherweise aus Beton hergestellten Schlitzrinnenkanals eindringen und in diesem Bereich eine feste Verklebung bewirken kann, zugleich aber auch eine feste Verklebung mit dem freigelegten Liner eingeht.

In diesem Zustand und unter Aufrechterhaltung des Innendrucks kann in einer Alternative des erfindungsgemäßen Verfahrens der Relining-Schlauch über mehrere Stunden, beispielsweise 2 bis 3 Stunden, gehalten werden, bis durch Einwirkung der Umgebungswärme die Aushärtung der Beschichtung abgeschlossen ist. Nach Ablauf dieser vorbestimmbaren Haltedauer kann sodann das Aushärten des Liners bewirkt werden, indem beispielsweise eine im Innern des Relining-Schlauches positionierte UV-Strahlungsquelle aktiviert wird und UV-Licht aussendet, welches durch den Innenschlauch hindurch auf den Liner trifft und dessen Aushärtungsreaktion in Gang gesetzt. Der Liner wird innerhalb kürzester Zeit formstabil, drückt jedoch die Beschichtung weiter fest gegen die Innenoberfläche des Schlitzrinnenkanals.

Anschließend können mit den Durchgangsschlitzen kommunizierende Durchbrechungen in den ausgehärteten Relining-Schlauch eingebracht werden, die bis in den Innenraum des Relining-Schlauches führen, um die funktionsfähige Auskleidung des Schlitzrinnenkanals mit dem Relining-Schlauch abzuschließen. Im Bereich der Durchbrechungen ist sodann der Relining-Schlauch durch die ausgehärtete Beschichtung mit seinem Liner unmittelbar an der Innenoberfläche des Schlitzrinnenkanals verklebt, sodass kein Spalt entstehen kann, durch den unkontrolliert Flüssigkeit abfließen kann. Eine nach dem erfindungsgemäßen Verfahren hergestellte Auskleidung eines Schlitzrinnenkanals erreicht von daher höchste Dauer-Dichtigkeitswerte.

Nach einem Vorschlag der Erfindung wird der Außenschlauch im Schritt a) im vorgesehenen Bereich aufgeschnitten und abgeführt.

Nach einem weiteren Vorschlag der Erfindung wird die Beschichtung aus einem unter Wärmeeinwirkung aushärtenden Epoxid- oder Silikatharz gebildet, das in flüssiger Form auf den freigelegten Liner im Bereich aufgebracht wird.

Nach einem weiteren Vorschlag der Erfindung ist vorgesehen, dass nach der Beaufschlagung des Relining-Schlauches mit dem Innendruck und Anlage an der Innenwandung im Schritt d) zur Durchführung des Schrittes e) nach einer vorbestimmten Haltezeit der Relining-Schlauch durch den Innenschlauch mit UV-Licht bestrahlt wird. Dabei kann die Haltezeit, sofern zunächst die Beschichtung ausgehärtet werden soll und anschließend der Liner durch Bestrahlung mit UV-Licht ausgehärtet werden soll, zwischen 2 und etwa 3 Stunden betragen, was vom Fachmann entsprechend der Gegebenheiten und des verwendeten Materials der Beschichtung ausgewählt werden kann.

Es kann aber auch vorgesehen sein, unmittelbar nach dem Aufweiten des eingebrachten Relining-Schlauches durch Beaufschlagung mit Innendruck die Bestrahlung mit UV-Licht zu beginnen, wodurch auch die Beschichtung durch die abgestrahlte Wärme der UV-Lichtquelle gleichsam ausgehärtet wird.

Die Vorrichtung zur Herstellung eines Relining-Schlauches gemäß der Erfindung zeichnet sich dadurch aus, dass ein Relining-Schlauchrohling, der einen Innenschlauch, einen Außenschlauch und einen zwischen Innenschlauch und Außenschlauch angeordneten Liner aus einem aushärtbaren Material umfasst und sich entlang einer Längsachse erstreckt, bereitgestellt wird und in der erfindungsgemäßen Vorrichtung zu einem Relining-Schlauch konditioniert wird. Dazu weist die Vorrichtung eine Zuführeinrichtung für die Zuführung des Relining-Schlauchrohlings in Richtung der Längsachse auf, eine der Zuführeinrichtung nachgeordnete Schneideinrichtung zum Einschneiden des Außenschlauchs entlang eines sich in Richtung der Längsachse erstreckenden Bereichs und ferner eine zugeordnete Aufwickeleinrichtung zum Aufwickeln des im Bereich eingeschnittenen Streifens des Außenschlauchs unter Freilegung des Liners im Bereich. Nachgeordnet ist sodann eine Auftragsstation zum Auftragen einer streifenförmigen aushärtbaren Beschichtung auf den freigelegten Liner im Bereich.

Erfindungsgemäß kann der Auftragsstation nachgeordnet eine Rakelstation zum Egalisieren der vorzugsweise in flüssiger Form aufgebrachten Beschichtung vorgesehen sein.

Darüber hinaus kann die Vorrichtung auch eine Faltstation zum Einfalten des mit der Beschichtung versehen Relining-Schlauchs aufweisen, damit dieser in eingefaltetem Zustand in den Schlitzrinnenkanal eingebracht und anschließend durch Aufbringen des Innendrucks entfaltet und an die Innenwandung angepresst werden kann.

Das erfindungsgemäße Verfahren und die Vorrichtung eigenen sich insbesondere für eine Inline-Verarbeitung des Relining-Schlauches am Ort der geplanten Schlitzrinnensanierung. Die Zuführung des Schlauchrohlings erfolgt vorzugsweise mit einer Geschwindigkeit, die der Einbringungsgeschwindigkeit des fertigen Relining-Schlauches in den Schlitzrinnenkanal entspricht und ist darüber hinaus regelbar. Die Vorrichtung wird unmittelbar am Startschacht der Schlitzrinne positioniert und der produzierte Relining-Schlauch wird unmittelbar aus der Vorrichtung in den Schlitzrinnenkanal eingezogen.

Weitere Ausgestaltungen und Einzelheiten der Erfindung werden nachfolgend anhand der ein Ausführungsbeispiel darstellenden Zeichnung erläutert. Es zeigen:
- Figur 1: in perspektivischer Darstellung einen zu sanierenden Schlitzrinnenkanal;
- Figur 2: in perspektivischer Darstellung einen Relining-Schlauch gemäß der Erfindung;
- Figur 3: in schematischer vereinfachter Darstellung eine Vorrichtung zur Herstellung des Relining-Schlauchs gemäß Figur 2.

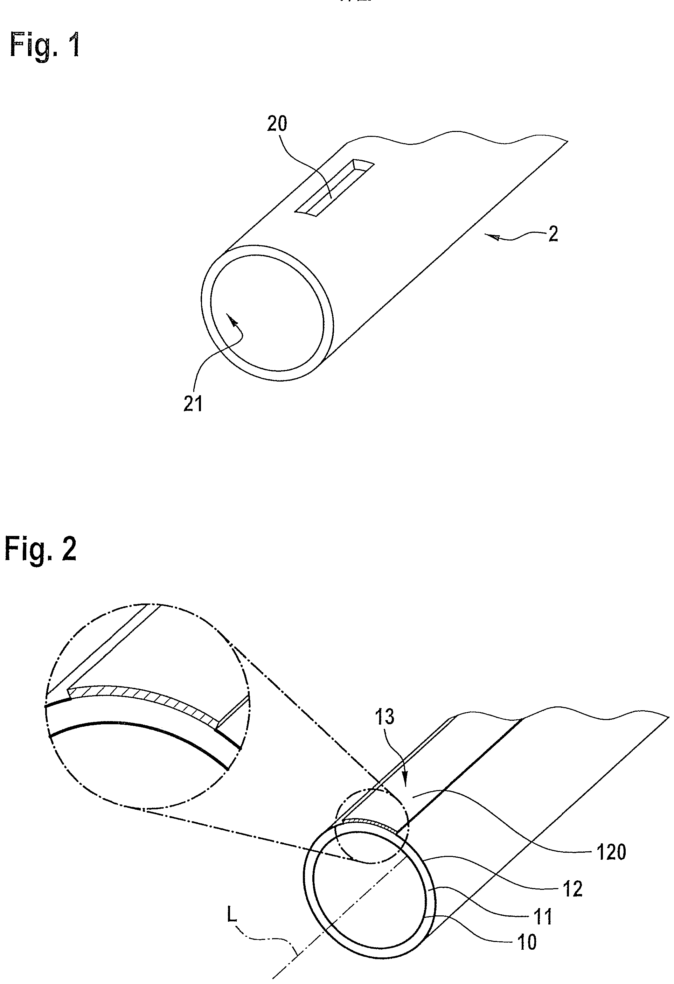

Aus der Figur 1 ist ein Schlitzrinnenkanal 2 in Gestalt eines Rohrabschnittes ersichtlich, der ein von einer Innenoberfläche 21 umgrenztes Lumen aufweist, über welches Flüssigkeit abgeführt werden kann, die über mehrere im oberen Bereich des Schlitzrinnenkanals 2 eingebrachte Durchbrechungen 20 durch die Wandung des Schlitzrinnenkanals 2 hindurch eintritt.

Um einen solchen oder auch anderen Querschnittsformen aufweisenden Schlitzrinnenkanal 2 im Schadensfall sanieren zu können, sodass kein Austritt von Flüssigkeit stattfindet, wird ein Relining-Schlauch gemäß der Darstellung in Figur 2 verwendet, der in der nachfolgend beschriebenen Weise in den Schlitzrinnenkanal 2 eingebracht wird.

Der Relining-Schlauch 1 erstreckt sich entlang einer Längsachse L und weist von innen nach außen einen beispielsweise aus einer Polyethylenfolie gebildeten Innenschlauch 10, einen daran anschließenden Liner 11 aus einem aushärtbaren Material und außenseitig einen einhüllenden Außenschlauch 12 auf, der beispielsweise aus einem mit Polymermaterial beschichteten Polyolefinvlies gebildet ist.

Der aushärtbare Liner 11 befindet sich zwischen dem Innenschlauch 10 und dem Außenschlauch 12 als mittlere Schicht und ist aus einem unter UV-Lichteinwirkung aushärtenden Kunststoffmaterial, beispielsweise einem entsprechenden GFK-Material gebildet.

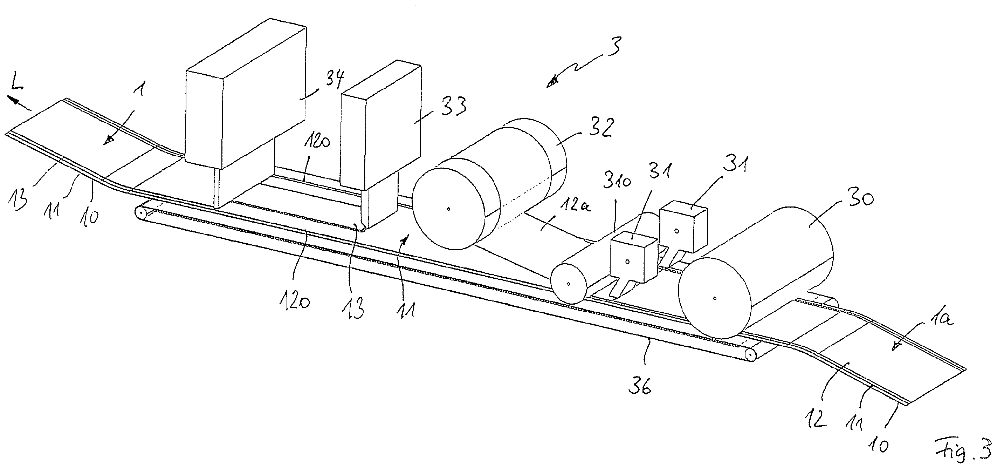

In einer aus der Darstellung gemäß Figur 3 ersichtlichen Vorrichtung wird ein solcher flach zusammengefalteter Relining-Schlauchrohling 1a in Richtung der Längsachse L der dargestellten Vorrichtung 3 zugeführt, die zu diesem Zweck über eine Fördereinrichtung in Gestalt eines umlaufenden Förderbandes 36 und einer oberhalb des Förderbandes 36 angeordneten Zuführeinrichtung 30 in Form einer angetriebenen Förderwalze verfügt.

Der solchermaßen zugeführte Relining-Schlauchrohling 1a gelangt nach Durchlauf durch die Zuführeinrichtung 30 an die der Zuführeinrichtung 30 nachgeordnete Schneideinrichtungen 31, die gemeinsam mit einer Fixierwalze 310 den oben liegenden Außenschlauch 12 beidseits der Mittellinie entlang der Längserstreckung L durchgängig aufschneiden, sodass ein Streifen 12a des Außenschlauchs 12 abgetrennt und auf eine Aufwickeleinrichtung 32 abgeführt und aufgewickelt wird. Demgemäß wird im Bereich des aufgeschnittenen Außenschlauchs 12 ein streifenförmiger Bereich 120 gebildet, der sich in Richtung der Längsachse L erstreckt, in welchem der unterhalb des Außenschlauchs 12 liegende Liner 11 nicht mehr vom Außenschlauch 12 bedeckt ist, sondern freigelegt ist. In diesem Bereich wird sodann über eine Dosierstation 33 eine aushärtende Beschichtung 13 aus einem Epoxidharz in flüssiger Form auf den freigelegten Liner 11 aufgebracht, wobei in der Dosierstation 33 das Epoxidharz mit dem erforderlichen Härter zu einer wärmeaushärtenden reaktiven Mischung gemischt und unmittelbar aufgebracht wird. Anschließend wird der aufgebrachte Streifen der Beschichtung 13 mit einem Rakelmesser einer Rakelstation 34 egalisiert und vollflächig über die gesamte Breite des streifenförmigen Bereichs 120 verstrichen. Ausgangs der Vorrichtung 3 liegt somit ein Relining-Schlauch 1 gemäß Darstellung der Figur 2 vor, in welchem der Außenschlauch 12 in einem streifenförmigen und in Richtung der Längsachse L verlaufenden Bereich 120 unterbrochen ist, wobei in diesem Bereich 120 der nicht vom Außenschlauch 12 bedeckte Liner 11 unmittelbar mit der aufgebrachten streifenförmigen aushärtbaren Beschichtung 13 versehen ist, die gemäß der vergrößerten Darstellung in der Figur 2 unmittelbar den Liner 11 kontaktiert. Die Breite der Beschichtung 13 ist deutlich größer als die Breite der Durchgangsschlitze 20 ausgeführt.

Anschließend wird in an sich bekannter Weise der Relining-Schlauch 1 in das Innere des zu sanierenden Schlitzrinnenkanals 2 eingebracht, wobei der streifenförmige Bereich 120 mit der aufgebrachten Beschichtung 13 so orientiert wird, dass die Beschichtung 13 den Durchgangsschlitzen 20 des Schlitzrinnenkanals 2 zugewandt ist, d. h. unmittelbar unterhalb der Durchgangsschlitze 20 verläuft.

Nunmehr wird ebenfalls in an sich bekannter Weise der Relining-Schlauch 1 mit einem Innendruck beaufschlagt, sodass er sich an die Innenoberfläche 21 des Schlitzrinnenkanals 2 vollflächig anliegt, wobei die Beschichtung 13 an den umgebenden Bereich der Durchgangsschlitze 20 des Schlitzrinnenkanals 2 angepresst wird, dort in das Material des Schlitzrinnenkanals 2, üblicherweise Beton, eindringt und eine Verklebung mit dem Schlitzrinnenkanal 2 umlaufend um die Durchgangsschlitze 20 bewirkt. Andererseits verklebt die Beschichtung 13 auch mit dem freigelegten Liner 11 im Innern des Relining-Schlauches 1.

Diese Verklebung der Beschichtung 13 wird üblicherweise durch Wärmeeinwirkung hervorgerufen, sodass der Zustand der Beaufschlagung mit einem Innendruck während einer vorbestimmbaren Haltedauer von beispielsweise mehreren Stunden, vorzugsweise ca. 2 Stunden aufrechterhalten wird.

Anschließend oder gleichzeitig kann im Innern des eingebrachten Relining-Schlauches 1 eine UV-Lichtquelle aktiviert werden, die den strahlungshärtenden Liner 11 durch den Innenschlauch 10 hindurch mit UV-Licht bestrahlt, sodass dieser binnen kurzer Zeit aushärtet.

Abschließend kann durch die Durchgangsschlitze 20 im ausgekleideten Schlitzrinnenkanal 2 hindurch der Relining-Schlauch 1 mit korrespondierenden Öffnungen versehen werden, sodass das aufzunehmende Wasser durch die Durchgangsschlitze 20 und die Öffnungen hindurch in das Innere des den Schlitzrinnenkanals 2 auskleidenden Relining-Schlauches 1 gelangen und von dort abgeführt werden kann. Infolge der mit der Beschichtung 13 bewirkten unmittelbaren Verklebung einerseits mit der Innenoberfläche 21 des Schlitzrinnenkanals 2, andererseits mit der ausgehärteten Schicht des Liners 11 wird dabei einer unerwünschten Spaltbildung entgegengewirkt, sodass es zu keinem Flüssigkeitsdurchtritt kommen kann.

Neben der Sanierung von Schlitzrinnen kann der vorangehend beschriebene Relining-Schlauch auch zur Sanierung beliebiger anderer Rohr- oder Kanalabschnitte eingesetzt werden.

### Bezugszeichenliste:

- 1:: Relining-Schlauch
- 1 a:: Relining-Schlauchrohling
- 2:: Schlitzrinnenkanal
- 3:: Vorrichtung
- 10:: Innenschlauch
- 11:: Liner
- 12:: Außenschlauch
- 12a:: Abschnitt des Außenschlauchs
- 13:: Beschichtung
- 20:: Durchgangsschlitz
- 21:: Innenwandung
- 30:: Zuführeinrichtung
- 31:: Schneideinrichtung
- 32:: Aufwickeleinrichtung
- 33:: Auftragsstation
- 34:: Rakelstation
- 36:: Förderband
- 120:: Bereich
- 310:: Fixierwalze

- L:: Längsachse

## Patentansprüche

1. Relining-Schlauch (1) mit einer Längsachse (L), umfassend einen Innenschlauch (10), einen Außenschlauch (12) und einen zwischen Innenschlauch (10) und Außenschlauch (12) angeordneten Liner (11) aus einem aushärtbaren Material, **dadurch gekennzeichnet, dass** der Außenschlauch (12) in einem streifenförmigen und in Richtung der Längsachse (L) verlaufenden Bereich (120) unterbrochen ist, so dass der Liner (11) in diesem Bereich (120) nicht vom Außenschlauch (12) bedeckt ist und unmittelbar auf den nicht vom Außenschlauch bedeckten Bereich des Liners (11) eine streifenförmige aushärtbare Beschichtung (13) aufgebracht ist, die mit dem Liner (11) im Bereich (120) haftfest verbindbar ist.

2. Relining-Schlauch (1) nach Anspruch 1, **dadurch gekennzeichnet, dass** die Beschichtung auf Basis eines selbstaushärtenden oder unter Wärmeeinwirkung aushärtenden Epoxidharz oder Silikatharz oder auf Basis eines unter Einwirkung von UV-Licht aushärtenden Harzes gebildet ist.

3. Relining-Schlauch (1) nach Anspruch 1 oder 2, **dadurch gekennzeichnet, dass** die Beschichtung aus einem 2-komponentigen Epoxidharz mit einer Topfzeit von 20 bis 50 Minuten gebildet ist.

4. Relining-Schlauch (1) nach einem der Ansprüche 1 bis 3, **dadurch gekennzeichnet, dass** der Liner (11) aus einem unter UV-Lichteinwirkung aushärtenden Kunststoffmaterial gebildet ist.

5. Relining-Schlauch (1) nach einem der Ansprüche 1 bis 4, **dadurch gekennzeichnet, dass** der Außenschlauch (12) aus einem mit Polymermaterial kaschierten Polyolefinvlies gebildet ist.

6. Relining-Schlauch (1) nach einem der Ansprüche 1 bis 5, **dadurch gekennzeichnet, dass** der Bereich (120) über die gesamte Länge des Relining-Schlauches (1) durchgängig verläuft.

7. Verfahren zum Auskleiden eines eine Vielzahl von Durchgangsschlitzen (20) aufweisenden Schlitzrinnenkanals (2) mit einem Relining-Schlauch (1), der einen Innenschlauch (10), einen Außenschlauch (12) und einen zwischen Innenschlauch (10) und Außenschlauch (12) angeordneten Liner (11) aus einem aushärtbaren Material umfasst und sich entlang einer Längsachse (L) erstreckt, **gekennzeichnet durch** die Abfolge der Schritte:
a) Entfernen des Außenschlauches (12) in einem streifenförmigen und in Richtung der Längsachse (L) verlaufenden Bereich (120) unter Freilegung des Liners (11) im Bereich (120);
b) unmittelbares Aufbringen einer streifenförmigen aushärtbaren Beschichtung (13) auf den freigelegten Liner (11) im Bereich (120);
c) Einbringen des Relining-Schlauches (1) in den Schlitzrinnenkanal (2), wobei der Bereich (120) mit der aufgebrachten Beschichtung (13) unterhalb der Durchgangsschlitze (20) positioniert wird;
d) Beaufschlagen des Relining-Schlauches (1) mit einem Innendruck und Aufweiten desselben bis zur Anlage an einer Innenwandung (21) des Schlitzrinnenkanals (2);
e) Aushärten der Beschichtung (13) und des Liners (11) unter Aufrechterhaltung des Innendrucks;
f) Einbringen von mit den Durchgangsschlitzen (20) kommunizierenden Durchbrechungen in den ausgehärteten Relining-Schlauch (1).

8. Verfahren nach Anspruch 7, **dadurch gekennzeichnet, dass** der Außenschlauch (12) im Schritt a) im Bereich (120) aufgeschnitten wird.

9. Verfahren nach einem der Ansprüche 7 oder 8, **dadurch gekennzeichnet, dass** die Beschichtung (13) aus einem selbstaushärtenden oder unter Wärmeeinwirkung aushärtenden Epoxid- oder Silikatharz gebildet ist, dass in flüssiger Form auf den freigelegten Liner (12) im Bereich (120) aufgebracht wird.

10. Verfahren nach einem der Ansprüche 7 bis 9, **dadurch gekennzeichnet, dass** nach der Beaufschlagung des Relining-Schlauches (1) mit dem Innendruck und Anlage an der Innenwandung (21) im Schritt d) zur Durchführung des Schrittes e) nach einer vorbestimmten Haltezeit der Relining-Schlauch (1) durch den Innenschlauch (10) mit UV-Licht bestrahlt wird.

11. Verfahren nach Anspruch 10, **dadurch gekennzeichnet, dass** die Haltezeit zwischen 0 und 180 Minuten beträgt.

12. Vorrichtung zur Herstellung eines Relining-Schlauches (1) nach einem der Ansprüche 1 bis 6 aus einem Relining-Schlauchrohling (1a), der einen Innenschlauch (10), einen Außenschlauch (12) und einen zwischen Innenschlauch (10) und Außenschlauch (12) angeordneten Liner (11) aus einem aushärtbaren Material umfasst und sich entlang einer Längsachse (L) erstreckt, umfassend eine Zuführeinrichtung (30) für die Zuführung des Relining-Schlauchrohlings (1a) in Richtung der Längsachse (L), eine der Zuführeinrichtung nachgeordnete Schneideinrichtung (31) zum Einschneiden des Außenschlauchs (12) entlang eines sich in Richtung der Längsachse (L) erstreckenden Bereichs (120) und eine zugeordnete Aufwickeleinrichtung (32) zum Aufwickeln des im Bereich (120) eingeschnittenen Streifens des Außenschlauchs (12) unter Freilegung des Liners (11) im Bereich (120) und eine nachgeordnete Auftragsstation (33) zum Auftragen einer streifenförmigen aushärtbaren Beschichtung (13) auf den freigelegten Liner (12) im Bereich (120).

13. Vorrichtung nach Anspruch 12, **dadurch gekennzeichnet, dass** der Auftragsstation (33) eine Rakelstation (34) zum Egalisieren der Beschichtung (13) nachgeordnet ist.

14. Vorrichtung nach einem der Ansprüche 12 oder 13, dass sie eine Faltstation zum Einfalten des mit der Beschichtung (13) versehenen Relining-Schlauches (1) aufweist.
